Europäisches Patentamt

European Patent Office

Office européen des brevets

(11) Veröffentlichungsnummer: **0 312 018**
**A2**

(12) **EUROPÄISCHE PATENTANMELDUNG**

(21) Anmeldenummer: 88116945.2

(51) Int. Cl.⁴: **B60K 41/08**

(22) Anmeldetag: 12.10.88

(30) Priorität: 14.10.87 HU 462687

(43) Veröffentlichungstag der Anmeldung:
19.04.89 Patentblatt 89/16

(84) Benannte Vertragsstaaten:
AT DE FR GB

(71) Anmelder: **Csepel Autogyár**
**Pf. 38**
**H-2311 Szigetszentmiklos(HU)**

(72) Erfinder: **Simonyi, Sandor, Dipl.-Ing. Dr.**
**Petöfi u. 59**
**H-3102 Salgotarjan(HU)**
Erfinder: **Töröcsik, Laszlo, Dipl.-Ing.**
**Kakukk u. 10/b**
**H-1126 Budapest(HU)**
Erfinder: **Valoczi, György, Dipl.-Ing.**
**Budapesti u. 40**
**H-3104 Salgotarjan(HU)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) **Verfahren zum Wegrücken von Kraftfahrzeugen von einer Stelle durch mehrmaliges Hin - und Herschaukeln nach vorne und rückwärts.**

(57) Die Erfindung bezieht sich auf ein Verfahren zum Wegrücken von Kraftfahrzeugen von einer Stelle mit folgenden Verfahrensschritten:
- Es wird mit Hilfe eines Winkelgeschwindigkeitssignalgebers aus der Null-Winkelgeschwindigkeit oder aus dem mit höchstens 3 km/h Geschwindigkeit des Kraftfahrzeuges proportionalen praktisch Null-Winkelgeschwindigkeit jedwelchen Bauteiles oder Bauteilpaares des mit der Austriebswelle des automatischen Wechselgetriebes beginnenden und mit den Rädern endenden Teiles der Antriebskette ein elektrisches Signal erzeugt,
- es wird mit Hilfe eines Winkelgeschwindigkeitssignalgebers in der Leerlaufdrehzahl aus der Drehzahl der Kurbelwelle des Motors , oder einem rotierenden Bauteil, das mit einer zur Drehzahl der Kurbelwelle proportionaler Drehzahl rotiert, oder der Drehzahl der Antriebswelle des Stufenteiles des Wechselgetriebes ein weiteres elektrisches Signal erzeugt,
- es wird mit Hilfe eines Gaspedalstellungsignalgebers aus der Grundstellung des Gaspedals ein weiteres elektrisches Signal erzeugt, und
- es wird schließlich mit Hilfe eines dem Fahrzeugfahrer zur Verfügung stehenden Schalters ein Befehlsignal zum Anlassen mit mehrmaligem Schaukeln nach vorne und rückwärts erzeugt, und
- es wird im Falle der gemeinsamen Anwesenheit dieser Signale mittels drücken und zurücklassen des Gaspedals dem die Vorwärtsgangstufe und die Rückgangstufe schaltenden elektromagnetischen Ventil abwechselnd ein Steuersignal zugeführt.

Fig 1

## Verfahren zum Wegrücken von Kraftfahrzeugen von einer Stelle durch mehrmaliges Hin- und Herschaukeln nach vorne und rückwärts

Die Erfindung bezieht sich auf ein Verfahren, mit dem ein über ein automatisches Wechselgetriebe verfügendes Kraftfahrzeug durch mehrmaliges Hin- und Herschaukeln nach vorne und rückwärts von einer Stelle weggerückt werden kann, wobei in der Antriebskette des Kraftfahrzeuges mittels einem Verbrennungsmotor ein automatisches Wechselgetriebe durch einen darin eingebauten hydrodynamischen Momentwandler oder gegebenenfalls eine diesen kurzschließende Trockenreibkupplung angetrieben ist, unmittelbar mit dem automatischen Wechselgetriebe und/oder durch eine Kardanwelle dann mit Hilfe von mindestens einem Differential und daran angeschlossenen Halbwellen mindestens ein Paar Räder des Kraftfahrzeuges angetrieben wird, und die Stufenschaltung des automatischen Wechselgetriebes (hier auch die Betätigung der Trockenreibkupplung) mittels durch elektromagnetische Ventile geregelter Hilfsenergie durchgeführt wird, sowie ferner die Kraftstoffzufuhr des Motors durch ein Gaspedal geregelt wird.

Auf schwierigen Geländen kommt es häufig vor, daß die angetriebenen Räder des Kraftfahrzeuges infolge eines großen Rollwiderstandes durchdrehen. In einem solchen Fall schaukelt der Fahrzeugfahrer das Kraftfahrzeug nach vorne und rückwärts aus seinem Standort aus. Das kann auf die schnellste und günstigste Weise derart durchgeführt werden, daß der Fahrzeugfahrer das Wechselgetriebe abwechselnd in die Gangstufe I und in die Rückgangstufe schaltet.

Obwohl diese Schaltung mit der einfachen Umschaltung des Gangwählerschalters (Kontrollers) bei automatischen Wechselgetrieben leicht durchgeführt werden kann, entsteht ein Problem dadurch, daß die Richtungsänderung in einem solchen Bewegungszustand des Fahrzeuges und des Motors erfolgt, die zu groben Schaltungen und letzten Endes zur Beschädigung des Antriebssystems führen kann. Mit Rücksicht darauf, daß Kraftfahrzeuge selten auf diese Weise angefahren werden sollen, sind die Fahrzeugherstellerwerke der Meinung, daß es vom Fahrzeugfahrer zu erwarten ist, in solchen Fällen dem Umschalten größere Aufmerksamkeit zu widmen.

Da aber bei den Fahrzeugfahrern eben in solchen Fällen Unaufmerksamkeit und Hastigkeit zu beobachten ist, ist die oben erwähnte Meinung der Herstellerfirmen nicht zutreffend.

Aufgabe der Erfindung ist es, für ein über ein automatisches Wechselgetriebe verfügendes Kraftfahrzeug ein Verfahren zu schaffen, mit dem das mehrmalige Schaukeln nach vorne und rückwärts genau und ohne grobe Schaltungen durchgeführt werden kann.

Diese Aufgabe wird erfindungsgemäß durch folgende Verfahrensschritte gelöst:
- Es wird mit Hilfe eines Winkelgeschwindigkeitssignalgebers aus der Null-Winkelgeschwindigkeit oder aus dem mit höchstens 3 km/h Geschwindigkeit des Kraftfahrzeuges proportionalen praktisch Null-Winkelgeschwindigkeit jedwelchen Bauteiles oder Bauteilpaares des mit der Austriebswelle des automatischen Wechselgetriebes beginnenden und mit den Rädern endenden Teiles der Antriebskette ein elektrisches Signal erzeugt,
- es wird mit Hilfe eines Winkelgeschwindigkeitssignalgebers in der Leerlaufdrehzahl aus der Drehzahl der Kurbelwelle des Motors , oder einem rotierenden Bauteil, das mit einer zur Drehzahl der Kurbelwelle proportionaler Drehzahl rotiert, oder der Drehzahl der Antriebswelle des Stufenteiles des Wechselgetriebes ein weiteres elektrisches Signal erzeugt,
- es wird mit Hilfe eines Gaspedalstellungsignalgebers aus der Grundstellung des Gaspedals ein weiteres elektrisches Signal erzeugt, und
- es wird schließlich mit Hilfe eines dem Fahrzeugfahrer zur Verfügung stehenden Schalters ein Befehlsignal zum Anlassen mit mehrmaligem Schaukeln nach vorne und rückwärts erzeugt, und - es wird im Falle der gemeinsamen Anwesenheit dieser Signale mittels drücken und zurücklassen des Gaspedals dem die Vorwärtsgangstufe und die Rückgangstufe schaltenden elektromagnetischen Ventil abwechselnd ein Steuersignal zugeführt.

Der Erfindung liegt der Gedanke zugrunde, daß die Schaltung des automatischen Wechselgetriebes nicht dem Fahrzeugfahrer überlassen bleiben darf, sondern dieser nur die Richtungsänderungen starten soll und die tatsächlichen Schaltungen erfolgen dann automatisch und ausschließlich im entsprechenden Bewegungszustand des Kraftfahrzeuges und des Motors.

Die Erfindung wird nachstehend anhand eines Ausführungsbeispiels unter Bezugnahme auf die beiliegenden Zeichnungen näher erläutert:

Es zeigt:

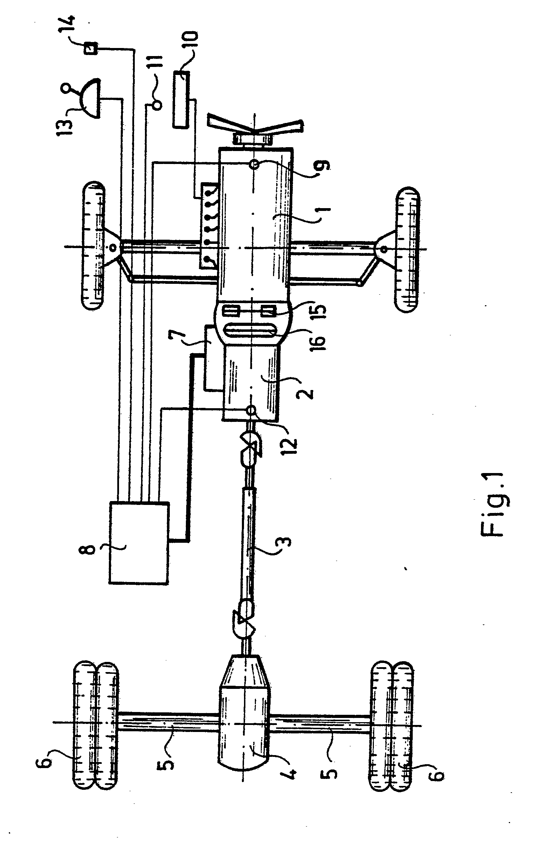

Fig.1 - ein Schema der Antriebskette eines zur Durchführung des erfindungsgemäßen Verfahrens geeigneten Kraftfahrzeuges,

Fig.2 - eine Schaltungsanordnung der zur Durchführung des erfindungsgemäßen Verfahrens erforderlichen Steuereinheit.

In dem vorliegenden Ausführungsbeispiel wurde die Steuerung eines automatischen Wechselgetriebes eines städtischen Autobusses mit dem erfindungsgemäßen Verfahren ausgestattet.

Die Kraftquelle des Autobusses ist ein Motor 1 - in diesem Fall ein Sechszylinder-Dieselmotor -, der ein automatisches Wechselgetriebe antreibt.

Das automatische Wechselgetriebe hat drei Vorwärts- und eine Rückwärtsgangstufe, und der Stufenteil ist durch einen hydrodynamischen Momentanwandler 16 oder eine diesen kurzschließende Trockenreibkupplung 15 mit der Hauptwelle des Motors 1 verbunden. Die Schaltung der Gangstufen des automatischen Wechselgetriebes 2, beziehungsweise das Schließen der Trockenreibkupplung 15 sind durch elektromagnetische Ventile 7 eines elektromagnetischen Ventilsystems gesteuert. Die Elektromagneten der elektromagnetischen Ventile 7 sind am Ausgang einer Steuereinheit 8 angeschlossen.

Die Abtriebswelle des automatischen Wechselgetriebes 2 ist durch eine Kardanwelle 3 mit einem Differential 4, und das Differential 4 ist durch Halbwellen 5 mit Rädern 6 verbunden. Es ist zu bemerken, daß die Erfindung auch bei Personenkraftwegen eingesetzt werden kann. Wie bekannt, sind das Differentialwerk und das Wechselgetriebe bei Personenkraftwagen mit Frontantrieb und Heckmotor in einem Block zusammengefaßt. In solchen Fällen befindet sich keine Kardanwelle in den Kraftfahrzeugen.

Zur Steuerung des automatischen Wechselgetriebes 2 werden bei verschiedenen Steuerungssystemen verschiedene Grundinformationen eingesetzt, die durch entsprechende Signalgeber erzeugt werden. Unabhängig davon, welche Art von Signalquellen bei einem gegebenen System verwendet werden, sind zur Durchführung des erfindungsgemäßen Verfahrens die nachstehend beschriebenen Signalgeber erforderlich, welche selbstverständlich teilweise oder vollständig mit den der Steuerung der Stufenschaltung dienenden Signalgebern identisch sein können.

Eine der nötigen Informationen ist die Winkelgeschwindigkeit des Rades 6. Da zwischen dem Rad 6 und dem automatischen Wechselgetriebe 2 eine Zwangsverbindung besteht, kann die Winkelgeschwindigkeit des Rades 6 durch die Drehzahl der Ausgangswelle des automatischen Wechselgetriebes 2 entsprechend repräsentiert werden. Aus diesem Grund wurde der Winkelgeschwindigkeitssignalgeber 12 hier eingebaut, und zwar an demjenigen Ausgang des automatischen Wechselgetriebes 2, der zugleich auch das dem Tachometer des Kraftfahrzeuges nötige Signal erzeugt. Falls das Kraftfahrzeug mit einem Antiblockier-System versehen sein sollte, verfügt jedes Rad über gesonderten Winkelgeschwindigkeitssignalgeber, deren Signale zur erfindungsgemäßen Steuerung hervorragend verwendet werden können. In diesem Fall muß an der Ausgangswelle des automatischen Wechselgetriebes kein gesonderter Winkelgeschwindigkeitssignalgeber eingebaut werden.

Eine weitere Information ist die Drehzahl des Motors 1. Da zwischen der Kurbelwelle und Hauptwelle des Motors 1 eine Übersetzung mit dem ständigen Wert von 2:1 besteht, kann als Winkelgeschwindigkeitssignal auch die Drehzahl der Hauptwelle eingesetzt werden. Aus diesem Grund wurde der Winkelgeschwindigkeitssignalgeber 9 an dieser Stelle eingebaut. Da es auch derartige Steuersysteme für automatische Wechselgetriebe gibt, bei denen an der Abtriebswelle (das heißt an der Antriebswelle des Stufenteiles) des hydrodynamischen Momentwandlers ein Winkelgeschwindigkeitssignalgeber eingebaut ist, kann die Grundfahrtdrehzahl des Motors auch dadurch ausgedrückt werden.

Sowohl der Winkelgeschwindigkeitssignalgeber 9 als auch der Winkelgeschwindigkeitssignalgeber 12 erzeugen elektrische Signale. Das Getriebeverhältnis zwischen der gemessenen Winkelgeschwindigkeit und der tatsächlich zu bewertenden Winkelgeschwindigkeit wird in der Steuereinheit 8 berücksichtigt.

Eine weitere erforderliche Information ist die Stellung des das Kraftzufuhrsystem des Motors 1 regelnden Gaspedals 10, nämlich ob das Gaspedal in Grundstellung steht oder gedrückt ist. Da das Maß der Gaszufuhr keine Bedeutung hat, wird zur erfindungsgemäßen Steuerung ein Gaspedalstellungssignalgeber 11 eingesetzt, der ebenfalls elektrische Signale erzeugt.

Schließlich ist ein Schalter 14 erforderlich, mit dem der Fahrzeugfahrer zur Durchführung des erfindungsgemäßen Verfahrens Befehle gibt. Der Schalter 14 kann entweder in dem der Auswahl der Schaltungsvarianten der Gangstufen dienenden Gangwählerschalter 13 (Kontroller), oder in Form eines gesonderten Schalters angeordnet werden.

Die oben genannten Singalquellen sind an den entsprechenden Eingängen der Steuereinheit 8 angeschlossen. Mit anderen Worten: Der Winkelgeschwindigkeitssignalgeber 12 ist am Eingang 17, der Winkelgeschwindigkeitssignalgeber 9 am Eingang 18, der Gaspedalstellungssignalgeber 11 am Eingang 19, der Schalter 14 am Eingang 20 angeschlossen.

Da die Steuereinheit 8 - wie bereits erwähnt - für die gesamte Steuerung des automatischen Wechselgetriebes 2 sorgt, können selbstverständlich auch weitere Signalquellen an ihren Eingängen angeschlossen werden. Das erfindungsgemäße Verfahren ergänzt daher nur die normale Steuerung, weshalb über die Steuereinheit 8 ausführlicher nur so viel beschrieben wird, wie es zum Verständnis des Verfahrens nötig ist.

Letzten Endes können bereits im Verkehr befindliche Kraftfahrzeuge auch nachträglich mit dieser Einrichtung versehen werden, wobei diese auch selbständig ausgebildet werden können.

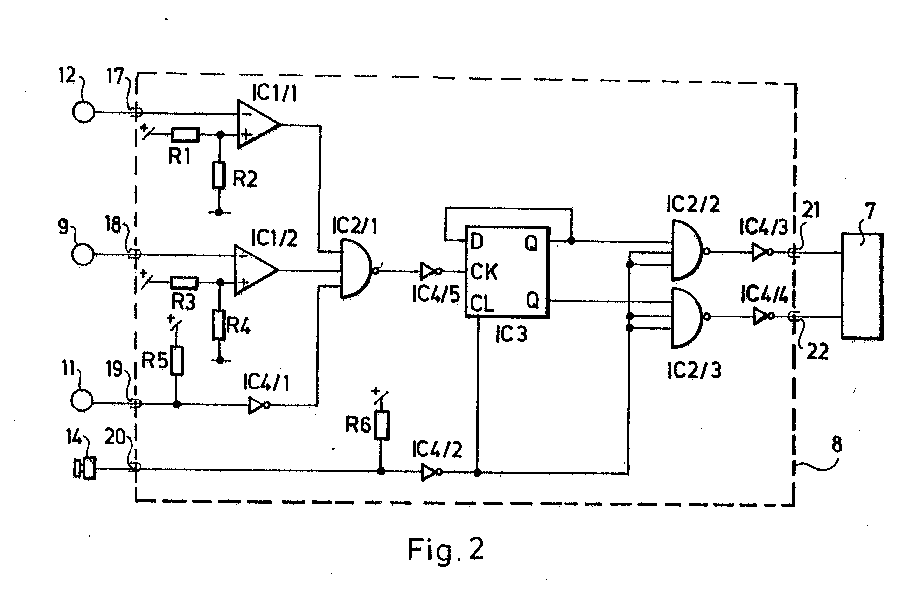

Ein Beispiel einer erfindungsgemäßen Steuereinheit 8 ist in Fig. 2 dargestellt. Diese Steuereinheit ist unter Verwendung der folgenden elektronischen Bauteile zusammengestellt: zweifaches Operationsverstärker IC1/1 und IC1/2/Typ LM 324/, drei NAND-Glieder mit je drei Eingängen IC2/1 bis IC2/3//LS10/, D-Flip-Flop IC3/Typ LS 74/, sechsfacher Inverter IC4/1 bis IC4/4/Typ LS 04/. Bei der Zusammensetzung wurden auch Widerstände R1 bis R6 verwendet. Die Bezeichnungen sind die üblichen Katalogbezeichnungen. Die der Aufgabe entsprechende Einrichtung kann auch mit anderen elektronischen Bauteilen aufgebaut werden.

Der durch die Erfindung betroffene Teil der Steuereinheit 8 ist aus den oben beschriebenen Bauteilen wie folgt aufgebaut.

Zum Empfang des Signals des Winkelgeschwindigkeitssignalgebers 12 ist der Eingang 17 an einem Eingang des Operationsverstärkers IC1/1 angeschlossen, wobei dessen anderer Eingang durch einen aus Widerständen R1-R2 bestehenden Spannungsteiler am positiven Pol der Speisespannung angeschlossen ist. Der Ausgang des Operationsverstärkers IC1/1 ist mit einem Eingang des NAND-Gliedes IC2/1 verbunden.

Der das Signal des Winkelgeschwindigkeitssignalgebers 9 empfangende Eingang 18 ist an einem Eingang des Operationsverstärkers IC1/2 angeschlossen. Der andere Eingang des Operationsverstärkers IC1/2 ist durch den aus Widerständen R3-R4 bestehenden Spannungsteiler am positiven Pol der Speisespannung und der Ausgang ist am zweiten Eingang des NAND-Gliedes IC2/1 angeschlossen.

Der mit dem Anschluß des Gaspedalstellungsignalgebers 11 besetzte Eingang 19 ist durch den Inverter IC4/1 am dritten Eingang des NAND-Gliedes IC2/1 angeschlossen. Der gemeinsame Punkt des Einganges 19 und des Inverters IC4/1 ist durch den Widerstand R5 ebenfalls am positiven Pol der Speisespannung angeschlossen.

Der Ausgang des NAND-Gliedes IC2/1 ist durch den Inverter IC4/5 am Takteingang CK des Flip-Flops IC3 angeschlossen. Der negierte Ausgang Q des Flip-Flops IC3 ist mit dem Dateneingang D und mit einem Eingang des NAND-Gliedes IC2/2 verbunden, der andere Ausgang Q ist an einem Eingang des NAND-Gliedes IC2/3 angeschlossen.

Das Signal des Schalters 14 ist durch den Eingang 20 empfangen, der durch den Inverter IC4/2 am Rückstelleingang CL des Flip-Flops IC3 und an je zwei Eingängen der NAND-Glieder IC2/2 und IC2/3 angeschlossen ist. Der gemeinsame Punkt des Einganges 20 und des Inverters IC4/2 ist durch den Widerstand R6 ebenfalls am positiven Pol der Speisespannung angeschlossen.

Der Ausgang des NAND-Gliedes IC2/2 ist durch den Inverter IC4/3 mit dem Ausgang 21 der Steuereinheit, der Ausgang 21 ist mit dem die Gangstufe I schaltenden elektromagnetischen Ventil 7, der Ausgang des NAND-Gliedes IC2/3 ist durch den Inverter IC4/4 mit dem Ausgang 22 der Steuereinheit, der Ausgang 22 ist mit dem die Rückgangstufe schaltenden elektromagnetischen Ventil 7 verbunden. Zwischen den Ausgängen und den Elektromagneten sind nicht dargestellte Leistungsverstärker eingebaut.

Das erfindungsgemäße Verfahren wird mit der oben beschriebenen Einrichtung wie folgt durchgeführt.

Wenn der Fahrzeugführer feststellt, daß der Autobus aus seiner festgefahrenen Lage nur mittels mehrmaligem Schaukeln nach vorne und rückwärts herausgebracht werden kann, gibt er mit Hilfe des Schalters 14 ein Befehlsignal zur Durchführung des Verfahrens. Der Motor kann sowohl vor diesem Befehl, als auch nach dem Befehl angelassen werden. Der Motor 1 läuft mit Leerlaufdrehzahl, die Winkelgeschwindigkeit der Räder 6 ist Null. Wenn der Fahrzeugfahrer das Gaspedal 11 drückt, wird am Ausgang des NAND-Gliedes IC2/1 ein Signal erscheinen, das im weiteren durch den Ausgang Q des Flip-Flops IC3 und durch den NAND-Glied IC2/2 als Steuersignal dem die Gangstufe I schaltenden elektromagnetischen Ventil 7 zur Schaltung der Gangstufe I einen Befehl gibt.

Wenn der Fahrzeugfahrer das Gaspedal 11 in seine Grundstellung zurückläßt, bricht der oben erwähnte Signalstrom ab und die Drehzahl des Motors 1 geht zurück. Da der Fahrzeugführer das Gaspedal stets dann zurücknimmt, wenn der Autobus in Vorwärtsfahrt nicht mehr weiter gelangt, beträgt die Winkelgeschwindigkeit der Räder 6 ebenfalls Null.

Mit dem erneuten Drücken des Gaspedals 11 erscheint das Signal wieder am Ausgang des NAND-Gliedes IC2/1, wodurch durch den Ausgang Q des Flip-Flops IC3 und durch den NAND-Glied IC2/3 als Steuersignal dem die Rückgangstufe schaltenden elektromagnetischen Ventil 7 zur Schaltung der Rückgangstufe einen Befehl gegeben wird.

Mit dem wiederholten Drücken und Zurücknehmen des Gaspedals 11 erscheint das Signal abwechselnd am Ausgang Q und am Ausgang Q des Flip-Flops IC3, wodurch die elektromagnetischen Ventile 7 abwechselnd die Gangstufe I bzw. die Rückwärtsgangstufe schalten.

Aus dem obigen ergibt sich, daß die Bedingung zur Durchführung des erfindungsgemäßen Verfahrens darin bestehen, daß das durch die Winkelgeschwindigkeitssignalgeber 9 und 12 erzeugte Signal einen Nullwert hat. Dies ist aber keine strenge Bedingung.

Ziel der Erfindung ist nur, grobe Schaltvorgänge zu beseitigen. Aus diesem Grund ist es möglich, die Bedingungen derart zu mildern, daß die Winkelgeschwindigkeit des Rades 6 praktisch als Null angenommen werden kann, wenn das Kraftfahrzeug mit einer 3 km/h Höchstgeschwindigkeit kriecht, und die Drehzahl des Motors 1 als Leerlaufdrehzahl angenommen wird, wenn diese unterhalb der geringsten Betriebsdrehzahl liegt. In unserem Fall beträgt die Leerlaufdrehzahl 550 U/min und die geringste Betriebsdrehzahl 800 U/min.

**Ansprüche**

Verfahren zum Wegrücken von Kraftfahrzeugen von einer Stelle durch mehrmaliges Hin- und Herschaukeln nach vorne und rückwärts, wobei in der Antriebskette des Kraftfahrzeuges mittels einem Verbrennungsmotor (1) ein automatisches Wechselgetriebe (2) durch einen darin eingebauten hydrodynamischen Momentwandler (16) oder gegebenenfalls eine diesen kurzschließende Trockenreibkupplung (2) angetrieben ist, unmittelbar mit dem automatischen Wechselgetriebe (2) und/oder durch eine Kardanwelle (3) dann mit Hilfe von mindestens einem Differential (4) und daran angeschlossenen Halbwellen (5) mindestens ein Paar Räder (6) des Kraftfahrzeuges angetrieben wird, und die Stufenschaltung des automatischen Wechselgetriebes (2) (hier auch die Betätigung der Trokkenreibkupplung (15) ) mittels durch elektromagnetische Ventile (7) geregelter Hilfsenergie durchgeführt wird, sowie ferner die Kraftstoffzufuhr des Motors (1) durch ein Gaspedal (10) geregelt wird, dadurch gekennzeichnet, daß aus der mit einer Null- oder höchstens 3 km/h Geschwindigkeit jedwelchen Bauteiles oder Bauteilpaares des mit der Austriebswelle des automatischen Wechselgetriebes (2) beginnenden und mit den Rädern (6) endenden Teiles der Antriebskette proportionaler praktisch Null - - Winkelgeschwindigkeit mit Hilfe eines Winkelgeschwindigkeitssignalgebers (12) ein elektrisches Signal erzeugt wird, aus der Drehzahl der Kurbelwelle des Motors (1) oder einem mit proportionaler Drehzahl rotierenden Bauteil, oder aus der Drehzahl der Antriebswelle des Stufenteiles des Wechselgetriebes (2) auf Leerlaufdrehzahl mit Hilfe eines Winkelgeschwindigkeitssignalgebers (9) ein weiteres elektrisches Signal erzeugt wird, aus der Grundstellung des Gaspedals (10) mit Hilfe eines Gaspedalstellungssignalgebers (11) ein weiteres elektrisches Signal erzeugt wird, schließlich mit Hilfe eines dem Fahrzeugführer zur Verfügung stehenden Schalters (14) zum Anfahren mit mehrnmaligem Schaukeln nach vorne und rückwärts ein Befehlsignal erzeugt wird, und bei der gemeinsamen Anwesenheit dieser Signale mittels Drücken und Zurücknehmen des Gaspedals (10) den die Gangstufe I und die Rückgangstufe schaltenden elektromagnetischen Ventilen (7) abwechselnd ein Steuersignal zugeführt wird.

Fig.1

Fig. 2